(19) Europäisches Patentamt
European Patent Office
Office européen des brevets

(11) **EP 3 139 640 A2**

(12) **EUROPEAN PATENT APPLICATION**

(43) Date of publication:
08.03.2017 Bulletin 2017/10

(21) Application number: 16160671.0

(22) Date of filing: 16.03.2016

(51) Int Cl.:
$H04S\ 3/00$ (2006.01)   $G10L\ 19/008$ (2013.01)
$G10L\ 21/0272$ (2013.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 11.08.2015 CN 201510490373

(71) Applicant: Xiaomi Inc.
Beijing 100085 (CN)

(72) Inventors:
• SHI, Runyu
  100085 Haidian District (CN)
• YEN, Chiafu
  100085 Haidian District (CN)
• DU, Hui
  100085 Haidian District (CN)

(74) Representative: Steinbauer, Florian
Dehns Germany LLP
Singlspielerhaus
Sendlinger Strasse 29
80331 München (DE)

(54) **METHOD AND DEVICE FOR ACHIEVING OBJECT AUDIO RECORDING AND ELECTRONIC APPARATUS**

(57)     The present disclosure relates to a method and a device for achieving object audio recording and an electronic apparatus. The method may include: performing (302) a sound collection operation via a plurality of microphones simultaneously so as to obtain a mixed sound signal; identifying the number of sound sources and position information of each sound source and separating out an object sound signal corresponding to each sound source from the mixed sound signal according to the mixed sound signal and set position information of each microphone (304); and combining (306) the position information and the object sound signal of individual sound sources to obtain audio data in an object audio format. With the technical solution of the present disclosure, direct recording of the object audio may be achieved.

Sound collection operation is performed via a plurality of microphones simultaneously to obtain a mixed sound signal — 302

Identify the number of sound sources and position information of each sound source and separate out an object sound signal corresponding to each sound source from the mixed sound signal, according to the mixed sound signal and set position information of each microphone — 304

Combine the position information of each sound source and the object sound signal to obtain audio data in an object audio format — 306

Fig.3

## Description

### TECHNICAL FIELD

The present disclosure generally relates to technical field of recording, and more particularly, to a method and a device for achieving object audio recording and an electronic apparatus.

### BACKGROUND

In February of 2015, next generation of audio codec standard MPEG-H 3D Audio of MPEG (Moving Picture Experts Group) officially became ISO/IEC 23008-3 international standard. Under this standard framework, a brand-new audio format-object audio is adopted. By the object audio (also called object-based audio), an orientation of sound may be identified, such that an auditor may listen to sound came from a specific orientation, no matter using an earphone or a stereo, and no matter how many loudspeakers there are.

### SUMMARY

The present disclosure provides a method and a device for achieving object audio recording and an electronic apparatus, so as to solve the deficiencies in the related art.

According to a first aspect of embodiments of the present disclosure, there is provided a method for achieving object audio recording, including:

performing a sound collection operation via a plurality of microphones simultaneously so as to obtain a mixed sound signal;

identifying the number of sound sources and position information of each sound source and separating out an object sound signal corresponding to each sound source from the mixed sound signal according to the mixed sound signal and set position information of each microphone; and

combining the position information and the object sound signal of individual sound sources to obtain audio data in an object audio format.

Advantageously, the identifying the number of sound sources and position information of each sound source and separating out the object sound signal corresponding to each sound source from the mixed sound signal according to the mixed sound signal and the set position information of each microphone includes:

identifying the number of sound sources and position information of each sound source and separating out the object sound signal corresponding to each sound source from the mixed sound signal according to an amplitude difference and a phase difference formed among respective microphones by a sound signal emitted by each sound source.

Advantageously, the identifying the number of sound sources and position information of each sound source and separating out the object sound signal corresponding to each sound source from the mixed sound signal according to the mixed sound signal and the set position information of each microphone includes:

identifying the number of sound sources and position information of each sound source from the mixed sound signal according to the mixed sound signal and the set position information of each microphone; and

separating out the object sound signal corresponding to each sound source from the mixed sound signal according to the mixed sound signal, the set position information of each microphone, the number of the sound sources and the position information of the sound sources.

Advantageously, the separating out the object sound signal corresponding to each sound source from the mixed sound signal according to the mixed sound signal, the set position information of each microphone, the number of the sound sources and the position information of the sound sources includes:

establishing a corresponding statistical model according to a characteristic quantity formed by a sound signal emitted by each sound source in a preset dimension; and

identifying and separating out a sound signal conforming to the position information of any sound source in the mixed sound signal via the statistical model as the object sound signal corresponding to the any sound source.

Advantageously, the combining the position information and the object sound signals of individual sound sources to obtain audio data in the object audio format includes:

combining corresponding object sound signals according to an arrangement order of individual sound sources so as to obtain multi-object audio data;
combining the position information of individual sound sources according to the arrangement order so as to obtain object audio auxiliary data; and
splicing header file information containing a preset parameter, the multi-object audio data and the object audio auxiliary data in turn so as to obtain the audio data in the object audio format.

Advantageously, the combining the position information and the object sound signal of individual sound sources to obtain audio data in the object audio format includes:

generating header file information containing a preset parameter and sending it to a preset audio process apparatus, wherein the header file information includes a time length of each frame of audio data; and
generating each frame of audio data in the object audio format conforming to the time length of each frame of audio data via the following steps, and sending each frame of the audio data in the object audio format to the preset audio process apparatus:

combining corresponding object audio signals according to an arrangement order of individual sound sources so as to obtain a multi-object audio data;
combining the position information of individual sound sources according to the arrangement order so as to obtain object audio auxiliary data; and
splicing the multi-object audio data and the object audio auxiliary data in turn so as to obtain each frame of audio data in the object audio format.

Advantageously, the combining corresponding object audio signals according to the arrangement order of individual sound sources so as to obtain the multi-object audio data includes:

sampling the object sound signals corresponding to individual sound sources at each sampling time point respectively according to a preset sampling frequency, and arranging all the sampled signals according to the arrangement order, so as to obtain a combined sampled signal; and
arranging the combined sampled signals obtained at each sampling time point in turn according to the sampling order, so as to obtain the multi-object audio data.

Advantageously, the combining the position information of individual sound sources according to the arrangement order so as to obtain the object audio auxiliary data includes:

sampling position information corresponding to individual sound sources at each sampling time point respectively according to a preset sampling frequency, and recording each sampled position information in association with corresponding sound source information and sampling time point information, so as to obtain combined sampled position information; and
arranging the combined sampled position information obtained at each sampling time point in turn according to the sampling order, so as to obtain the object auxiliary audio data.

Advantageously, the combining the position information of individual sound sources according to the arrangement order so as to obtain the object audio auxiliary data includes:

sampling position information corresponding to individual sound sources respectively according to a preset sampling frequency;

wherein if a current sampling point is a first sampling time point, the obtained each sampled position information is recorded in association with corresponding sound source information and sampling time point information; and if the current sampling point is not the first sampling time point, the obtained sampled position information of each sound source is compared with previous sampled position information of the same sound source which has been recorded, and when determining that they are different via the comparison, the sampled position information is recorded in association with corresponding sound source information and sampling time point information.

According to a second aspect of embodiments of the present disclosure, there is provided a device for achieving object audio recording, including:

a collection unit configured to perform a sound collection operation via a plurality of microphones simultaneously so as to obtain a mixed sound signal;

a processing unit configured to identify the number of sound sources and position information of each sound source and separate out an object sound signal corresponding to each sound source from the mixed sound signal according to the mixed sound signal and set position information of each microphone; and

a combination unit configured to combine the position information and the object sound signal of individual sound sources to obtain audio data in an object audio format.

Advantageously, the processing unit includes:

a processing subunit configured to identify the number of sound sources and position information of each sound source and separate out the object sound signal corresponding to each sound source from the mixed sound signal according to an amplitude difference and a phase difference formed among respective microphones by a sound signal emitted by each sound source.

Advantageously, the processing unit includes:

an identification subunit configured to identify the number of sound sources and position information of each sound source from the mixed sound signal according to the mixed sound signal and the set position information of each microphone; and

a separation subunit configured to separate out the object sound signal corresponding to each sound source from the mixed sound signal according to the mixed sound signal, the set position information of each microphone, the number of the sound sources and the position information of the sound sources.

Advantageously, the separation subunit includes:

a model establishing module configured to establish a corresponding statistical model according to a characteristic quantity formed by a sound signal emitted by each sound source in a preset dimension; and

a separation module configured to identify and separate out a sound signal conforming to the position information of any sound source in the mixed sound signal via the statistical model as the object sound signal corresponding to the any sound source.

Advantageously, the combination unit includes:

a signal combination subunit configured to combine corresponding object sound signals according to an arrangement order of individual sound sources so as to obtain multi-object audio data;

a position combination subunit configured to combine the position information of individual sound sources according to the arrangement order so as to obtain object audio auxiliary data; and

a first splicing subunit configured to splice header file information containing a preset parameter, the multi-object audio data and the object audio auxiliary data in turn so as to obtain the audio data in the object audio format.

Advantageously, the combination unit includes:

a header file sending subunit configured to generate header file information containing a preset parameter and send it to a preset audio process apparatus, wherein the header file information includes a time length of each frame of audio data, such that a signal combination subunit, a position combination subunit and a second splicing subunit generate each frame of audio data in object audio format conforming to the time length of each frame of audio data;

the signal combination subunit configured to combine corresponding object audio signals according to an arrangement order of individual sound sources so as to obtain multi-object audio data;

the position combination subunit configured to combine the position information of individual sound sources according to the arrangement order so as to obtain object audio auxiliary data;

the second splicing subunit configured to splice the multi-object audio data and the object audio auxiliary data in turn so as to obtain each frame of audio data in the object audio format; and

an audio data sending subunit configured to send each frame of audio data in object audio format to the preset audio processing apparatus.

Advantageously, the signal combination subunit includes:

a signal sampling module configured to sample the object sound signals corresponding to individual sound sources at each sampling time point respectively according to a preset sampling frequency, and arrange all the sampled signals according to the arrangement order, so as to obtain a combined sampled signal; and
a signal arrangement module configured to arrange the combined sampled signals obtained at each sampling time point in turn according to the sampling order, so as to obtain the multi-object audio data.

Advantageously, the position combination subunit includes:

a first position recording module configured to sample position information corresponding to individual sound sources at each sampling time point respectively according to a preset sampling frequency, and record each sampled position information in association with corresponding sound source information and sampling time point information, so as to obtain combined sampled position information; and
a position arrangement module configured to arrange the combined sampled position information obtained at each sampling time point in turn according to the sampling order, so as to obtain the object auxiliary audio data.

Advantageously, the position combination subunit includes:

a position sampling module configured to sample position information corresponding to individual sound sources respectively according to a preset sampling frequency;
a second position recording module configured to, if a current sampling point is a first sampling time point, the obtained each sampled position information is recorded in association with corresponding sound source information and sampling time point information; and if the current sampling point is not the first sampling time point, the obtained sampled position information of each sound source is compared with previous sampled position information of the same sound source which has been recorded, and when determining that they are different via the comparison, the sampled position information is recorded in association with corresponding sound source information and sampling time point information.

According to a third aspect of embodiments of the present disclosure, there is provided an electronic apparatus, including:

a processor; and
a memory for storing instructions executable by the processor;

wherein the processor is configured to:

perform a sound collection operation via a plurality of microphones simultaneously so as to obtain a mixed sound signal;
identify the number of sound sources and position information of each sound source and separating out an object sound signal corresponding to each sound source from the mixed sound signal according to the mixed sound signal and set position information of each microphone; and
combine the position information and the object sound signals of individual sound sources to obtain audio data in an object audio format.

The present invention also provides a computer program, which when executed on a processor of an electronic apparatus, performs the above method. The present invention also provides a computer readable storage medium comprising this computer program.
The technical solutions provided by embodiments of the present disclosure have the following beneficial effects:

It can be known from the above embodiments, in the present disclosure, by setting a plurality of microphones and performing sound collection at the same time, the obtained mixed sound signal contains the sound signals collected by respective microphones, and by combining the set position information among respective microphones, each sound source is identified and a corresponding object sound signal is separated out without separately collecting the sound signal of each sound source, which reduces the dependency and requirement for the hardware apparatus, and audio data in the Object Audio format can be obtained directly.

It is to be understood that both the foregoing general description and the following detailed description are exemplary and explanatory only and are not restrictive of the invention, as claimed.

**BRIEF DESCRIPTION OF THE DRAWINGS**

The accompanying drawings, which are incorporated in and constitute a part of this specification, illustrate embodiments consistent with the invention and, together with the description, serve to explain the principles of the invention.

Fig. 1 is a schematic diagram of acquiring an object audio in the related art.
Fig. 2 is another schematic diagram of acquiring an object audio in the related art.
Fig. 3 is a flow chart of a method for recording an object audio, according to an exemplary embodiment of the present disclosure.
Fig. 4 is a flow chart of another method for recording an object audio, according to an exemplary embodiment of the present disclosure.
Fig. 5 is a schematic diagram of collecting a sound source signal, according to an exemplary embodiment of the present disclosure.
Fig. 6 is a flow chart of further another method for recording an object audio, according to an exemplary embodiment of the present disclosure.
Fig. 7 is schematic diagram of a frame structure of an object audio, according to an exemplary embodiment of the present disclosure.
Fig. 8 is schematic diagram of another frame structure of an object audio, according to an exemplary embodiment of the present disclosure.
Fig. 9 is schematic diagram of further another frame structure of an object audio, according to an exemplary embodiment of the present disclosure.
Fig. 10-Fig. 18 are block diagrams illustrating a device for recording an object audio, according to an exemplary embodiment of the present disclosure.
Fig. 19 is a structural block diagram illustrating a device for recording an object audio, according to an exemplary embodiment of the present disclosure.

**DETAILED DESCRIPTION**

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

In the related art, it is incapable of obtaining Object Audio (object audio) via direct recording. For convenient of understanding, typical processing modes in the related art are introduced below.

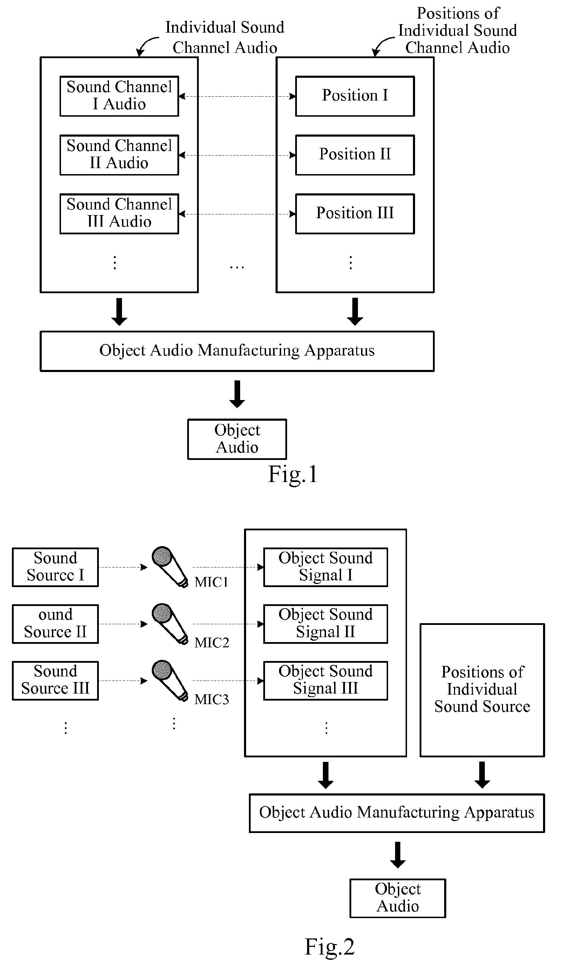

Fig. 1 is a schematic diagram of acquiring an object audio in the related art. As show in Fig. 1, during the process, a plurality of mono audios need to be prepared in advance, such as a sound channel I audio, a sound channel II audio, and a sound channel III audio in Fig. 1. Meanwhile, position information corresponding to each mono audio needs to be prepared in advance, such as a position I corresponding to the sound channel I audio, a position II corresponding to the sound channel II audio, and a position III corresponding to the sound channel III audio. Finally, each sound channel audio is combined with the corresponding position via an object audio manufacturing apparatus, so as to obtain an object audio.

However, the following deficiencies exist in the processing manner shown in Fig. 1.

1) The audio data and the position information need to be prepared in advance, thereby the object audio cannot be obtained via a direct recording.
2) Meanwhile, the positions of respective sound channel audio are prepared and obtained independently, thereby the real position of each sound channel audio often cannot be reflected accurately.

Fig. 2 is another schematic diagram of acquiring an object audio in the related art. As shown in Fig. 2, a corresponding MIC (microphone) is prepared for each sound source, for example, a sound source I corresponds to a MIC1, a sound source II corresponds to a MIC2, and a sound source III corresponds to a MIC3. Each MIC only collects the corresponding sound source, and obtains corresponding object sound signal I, object sound signal II and object sound signal III. Meanwhile, position information of each sound source needs to be prepared in advance. Finally, the object sound signals and the position information corresponding to individual sound sources are combined via an object audio manufacturing apparatus, so as to obtain an object audio.

However, the following deficiencies exist in the processing manner shown in Fig. 2.

1) Each sound source needs to be equipped with a MIC separately, thereby the hardware cost is high.

2) Since the MIC must be close to the sound source, and move with the sound source, the implementation is very difficult, and the cost of the recording equipment will greatly increase.

3) Synchronization needs to be kept among the object sound signals respectively collected by the plurality of MICs, under the condition that the number of the sound sources is many and the MICs are close to the sound source and away from the object audio manufacturing apparatus, or under the condition that the wireless MICs are utilized, the implementation is very difficult.

4) Since the position information of the sound source are separately obtained and then added into the object audio at the later period, under the influence of relatively more sound sources and irregular movement, the finally obtained object audio will hardly true to the actual sound source position.

Thereby, the present disclosure provides technical solutions of achieving recording of object audio, and may solve the above-mentioned technical problems existing in the related art.

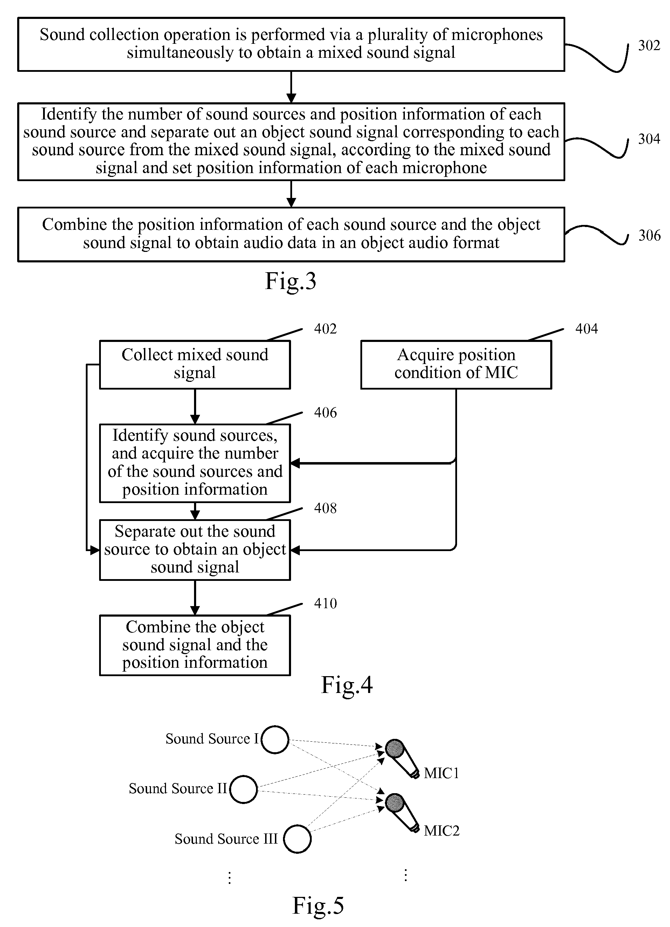

Fig. 3 is a flow chart of a method for recording an object audio, according to an exemplary embodiment. As shown in Fig. 3, the method is applied in a recording apparatus, and may include the following steps.

In step 302, a mixed sound signal is obtained by performing a sound collection operation via a plurality of microphones simultaneously.

In step 304, the number of sound sources and position information of each sound source are identified and an object sound signal corresponding to each sound source is separated out from the mixed sound signal, according to the mixed sound signal and set position information of each microphone.

As an illustrative embodiment, the number of sound sources and position information of each sound source may be identified and the object sound signal corresponding to each sound source may be separated out from the mixed sound signal directly according to characteristic information, such as an amplitude difference and a phase difference formed among respective microphones by a sound signal emitted by each sound source.

As another illustrative embodiment, the number of sound sources and position information of each sound source may be first identified from the mixed sound signal according to the characteristic information such as the above-mentioned amplitude difference and phase difference, based on the mixed sound signal and the set position information of each microphone; and then the object sound signal corresponding to each sound source may be separated out from the mixed sound signal, according to the characteristic information such as the above-mentioned amplitude difference and phase difference, based on the mixed sound signal and the set position information of each microphone.

In step 306, the position information of each sound source and the object sound signal are combined to obtain audio data in an object audio format.

In the present embodiment, the object audio may refer to a sound format for describing an Audio Object (audio object) in general, wherein a point sound source containing position information or a surface sound source whose central position may be roughly judged out, may be used as the audio object.

In the present embodiment, the object audio includes two portions: position of sound source and object sound signal, wherein the object sound signal per se may be deemed as a mono audio signal, a form of the object sound signal may be an uncompressed format such as a PCM (Pulse-code modulation) and a DSD (Direct Stream Digital), or may be a compressed format such as MP3 (MPEG-1 or MPEG-2 Audio Layer III), AAC (Advanced Audio Coding), and Dolby Digital, which is not limited by the present disclosure.

It can be known from the above embodiments, in the present disclosure, by setting a plurality of microphones and performing sound collection at the same time, the obtained mixed sound signal contains the sound signals collected by respective microphones, and by combining the set position information among respective microphones, each sound source is identified and a corresponding object sound signal is separated out without separately collecting the sound signal of each sound source, which reduces the dependency and requirement for the hardware apparatus, and audio data in the object audio format can be obtained directly.

Fig. 4 is a flow chart of another method for recording an object audio, according to an exemplary embodiment of the present disclosure. As shown in Fig. 4, the method may include the following steps.

In step 402, a mixed sound signal is obtained by performing a sound collection via a plurality of MIC simultaneously.

In the present embodiment, if the number of the microphones is 2, an object audio recording operation may be performed on a plurality of sound sources in a same plane; and if the number of the microphones is 3 or more than 3, the object audio recording operation may be performed on a plurality of sound sources in any solid space. For the same setting of sound sources, the more the microphones is, the more contributions it will make to the identification of the number and position information of the sound sources, and the separation of the object sound signal of each sound source.

In step 404, position condition of each MIC is acquired.

In the present embodiment, as shown in Fig. 5, during recording of object audio by each MIC, the position condition remains unchanged. Even if the position information of the sound source changes, the MIC needs not to change its position condition, since the change in position may be embodied in the collected mixed sound signal, and may be identified by the subsequent steps. Meanwhile, there is not a one-to-one correspondence between the MICs and the sound sources, no matter how many sound sources, sound signal collection may be performed via at least two MICs, and corresponding mixed sound signals may be obtained.

Thereby, compared with the embodiments shown in Fig. 1 and Fig. 2, the present embodiment can identify actual position of each sound source actually and accurately without many MICs, and without synchronous movement of MIC along with the sound source, which facilitates reducing cost of the hardware and complexity of the system, and improving the quality of the object audio.

In the present embodiment, the position condition of the MIC includes: set position information of the MIC. The position condition of each MIC may be recorded by using coordinates, for example, space coordinates using any position (such as a position of an audience) as an origin, such space coordinates may be rectangular coordinates (O-xyz), or spherical coordinates (O-θγ r), and a conversion relationship between these two coordinates is as follows:

$$\begin{bmatrix} x \\ y \\ z \end{bmatrix} = \begin{bmatrix} \cos(\theta) * \cos(\gamma) * r \\ \sin(\theta) * \cos(\gamma) * r \\ \sin(\gamma) * r \end{bmatrix}$$

wherein, x, y, and z respectively indicate position coordinates of the MIC or the sound source (object) on a x axis (fore-and-aft direction), a y axis (left-right direction), and a z axis (above-below direction) in the rectangular coordinates; and θ, y, and r respectively indicate a horizontal angle (an angle between a projection of a line connecting the MIC or the sound source and the origin in a horizontal plane and the x axis), a vertical angle (an angle between the line connecting the MIC or sound source and the origin and the horizontal plane) of the MIC or the sound source, and a straight-line distance of the MIC or the sound source from the origin, in the spherical coordinates.

Certainly, the position condition of each MIC may be separately recorded; or relative position condition among respective MICs may be recorded, and individual position condition of each MIC may be deduced therefrom.

In step 406, according to the position condition of each MIC, sound source is identified from the mixed sound signal, and the number of the sound sources and position information of each sound source are acquired.

As an exemplary embodiment, the number of the sound sources and the position information of each sound source may be identified based on an amplitude difference and a phase difference formed among respective microphones by the sound signal emitted by each sound source. In the present embodiment, the corresponding phase difference may be embodied by a difference among the time at which the sound signal emitted by each sound source arrives at respective microphones.

In practice, all the technical solutions of identifying the sound source (determining whether the sound source exists) and identifying the number of the sound source and the position information based on the amplitude difference and the phase difference in the related art may be applied in the process of the step 406, such as MUSIC (MUtiple Signal Classification) method, Beamforming method, and CSP (crosspower-spectrum phase) method.

Certainly, there are other algorithms of identifying the number of the sound sources and the position information based on the amplitude difference and the phase difference in the related art, and there are algorithms based on other principles for identifying the number of the sound sources and the position information in the related art, all of which may be applied in the embodiments of the present disclosure, and which is not restricted by the present disclosure.

In step 408, an object sound signal corresponding to each sound source is separated out from the mixed sound signal according to the position information of each MIC, and the number of the sound sources and the position information of each sound source.

As an exemplary embodiment, the object sound signal corresponding to each sound source may be separated out based on the amplitude difference and the phase difference formed among respective microphones by the sound signal emitted by each sound source, for example, the Beamforming method, and the GHDSS (Geometric High-order Decorrelation-based Source Separation) method may be used to implement the above separation.

As another exemplary embodiment, a corresponding statistical model may be established according to a characteristic quantity formed by the sound signal emitted by each sound source in a preset dimension; and a sound signal conforming to the position information of any sound source is identified and separated out from the mixed sound signal via the statistical model and is used as the object sound signal corresponding to the any sound source. The statistical model may adopt all the characteristic quantities in an available dimension, such as a spectrum difference, a volume difference, a phase difference, a base frequency difference, a base frequency energy difference, and a resonance peak, all of which can be used herein. The principle of this embodiment lies in: identifying whether a certain sound signal belongs to a certain specific sound field space via the statistical model (i.e., the inferred sound source position). For example, the algorithms such as GMM (Gaussian Mixture Model) may be used to achieve the above process.

Certainly, there are other algorithms of separating out the object sound signal based on the amplitude difference and the phase difference or the statistical model in the related art, and there are algorithms based on other principles for separating out the object sound signal in the related art, all of which may be applied in the embodiments of the present disclosure, and which is not restricted by the present disclosure.

In addition, in Fig. 4, steps 406 and 408 are respectively described, in actual, under some conditions, the process for implementing steps 406 and 408 needs to be respectively implemented indeed; while under some other conditions, the recognition of the number of the sound sources and the position information and the separation of the object sound signal of each sound signal may be achieved at the same time based on the principles of the above Beamforming, without the above two steps for processing respectively.

In step 410, the object sound signal and the position information of individual sound sources are combined to obtain an object audio.

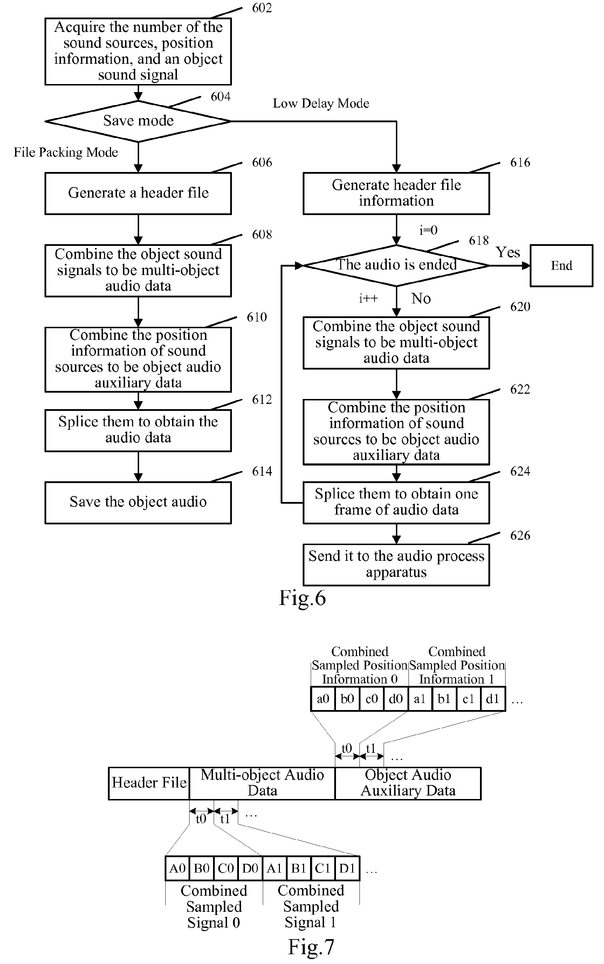

With respect to the combination operation in step 410, the detail description will be given below in combination with Fig. 6. Fig. 6 is a flow chart of further another method for recording an object audio, according to an exemplary embodiment of the present disclosure. As shown in Fig. 6, the method may include the following steps.

In step 602, the number of the sound sources, position information of each sound source, and an object sound signal of each sound source are acquired.

In step 604, a save mode selected by the user is determined, if the save mode is a File Packing Mode, the process switches to step 606; and if the save mode is a Low Delay Mode, the process switches to step 616.

1. File Packing Mode

In step 606, a header file is generated.

In the present embodiment, the header file contains predefined parameters describing the object audio, such as ID information, and a version number. As an exemplary embodiment, a format and content of the header file are shown in Table 1.

Table 1

| Parameter name | Bits | Mnemonic | Content |
|---|---|---|---|
| ID | 32 | bslbf | OAFF (Object audio ID) |
| Version | 16 | uimsbf | 1.0 (Version number of object audio) |
| nObjects | 16 | uimsbf | n (Number of sound sources) |
| nSamplesPerSec | 32 | uimsbf | a (sampling frequency) |
| wBitsPerSample | 16 | uimsbf | w (byte length of each sampling) |

In step 608, corresponding object sound signals are combined according to an arrangement order of individual sound sources so as to obtain multi-object audio data.

In the present embodiment, the procedure of combining the object sound signals may include:

1) sampling an object sound signal corresponding to each sound source at each sampling time point according to a preset sampling frequency, and arranging all the sampled signals according to the arrangement order, so as to obtain a combined sampled signal; and

2) arranging the combined sampled signals obtained at each sampling time point in turn according to the sampling order, so as to obtain the multi-object audio data.

For example, as shown in Fig. 7, in a data structure of an object audio in an exemplary embodiment, t0, t1 and the like are individual sampling time points corresponding to the preset sampling frequency. Taking the sampling time point t0 as an example, assuming that there are total of 4 sound sources A, B, C and D, and the arrangement order of the respective sound sources are A→B→C→D, then a sampled signal A0, a sampled signal B0, a sampled signal C0, and a sampled signal D0 are obtained by sampling the four sound sources according to the arrangement order, and a corresponding combined sampled signal 0 is generated. Similarly, by sampling in the same manner at each sampling time point, a combined sampled signal 0, and a combined sampled signal 1 corresponding to each sampling time point t0 and t1 respectively may be obtained. Finally, the multi-object audio data may be obtained by arranging them according to the corresponding sampling sequence of respective combined sampled signals.

In step 610, the positions of individual sound sources are combined according to the arrangement order of individual sound sources so as to obtain object audio auxiliary data.

As an exemplary embodiment, the procedure of combining the object sound signals may include:

1) sampling position information corresponding to each sound source at each sampling time point according to a preset sampling frequency, and recording each sampled position information in association with corresponding sound source information and the sampling time point information, so as to obtain combined sampled position information; and

2) arranging the combined sampled position information obtained at each sampling time point in turn according to the sampling order, so as to obtain the object auxiliary audio data.

In an implementation manner, the generation procedure of the object audio auxiliary data is similar to that of the multi-object audio data. Still taking Fig. 7 as an example, for the sampling time point t0, assuming that there are total of 4 sound sources A, B, C and D, and the arrangement order of the respective sound sources are A→B→C→D, then the position information of the 4 sound sources are sampled in turn according to this arrangement order, and then sampled position information a0, sampled position information b0, sampled position information c0, and sampled position information d0 are obtained, and a corresponding combined sampled position information 0 is generated. Similarly, by sampling in the same manner at each sampling time point, combined sampled position information 0, and combined sampled position information 1 corresponding to each sampling time point t0 and t1 respectively may be obtained. Finally, the object audio auxiliary data may be obtained by arranging them according to the sampling sequence corresponding to respective combined sampled position information.

In the present embodiment, the position information of all the sound sources at all the sampling time point are recorded in the object audio auxiliary data; however, since the sound sources do not move all the time, the data amount of the object audio auxiliary data may be reduced by differentially record the position information of the sound sources. The manner of differential record is explained by the following implementation manner.

As an another exemplary embodiment, the procedure of combining the object sound signals may include: sampling position information corresponding to each sound source according to a preset sampling frequency; wherein if a current sampling point is a first sampling time point, the obtained each sampled position information is recorded in association with the corresponding sound source information and the sampling time point information; and

if the current sampling point is not the first sampling time point, the obtained each sampled position information is compared with previous sampled position information of the same sound source which has been recorded, and when the comparison result is that they are different, the sampled position information is recorded in association with the corresponding sound source information and the sampling time point information.

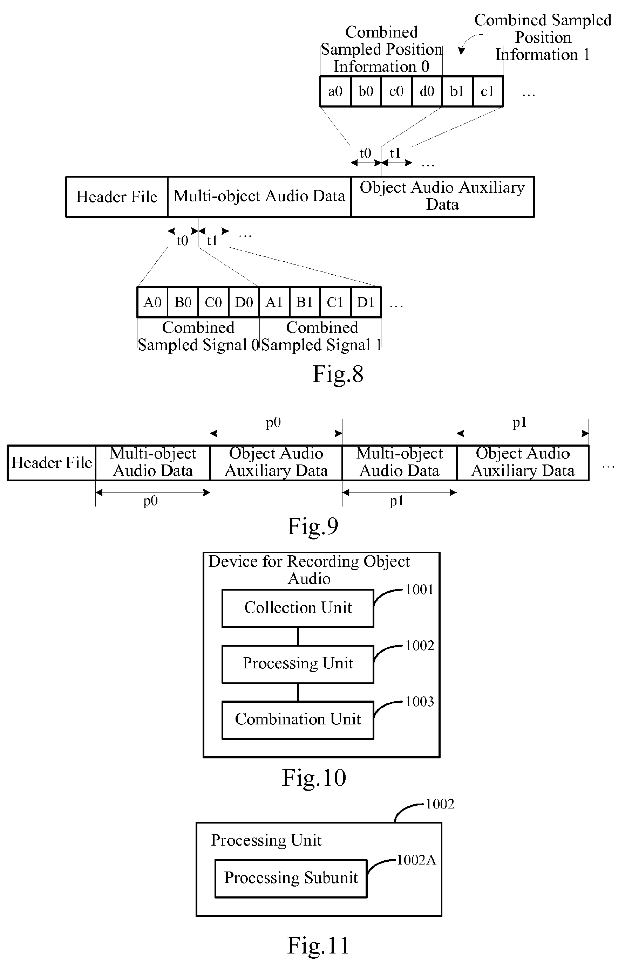

For example, as shown in Fig. 8, assuming that there are total of 4 sound sources A, B, C and D, and the arrangement order of the respective sound sources are A→B→C→D, then for the sampling time point t0, since the sampling time point t0 is the first sampling time point, the position information of the 4 sound sources are sampled in turn according to the implementation manner shown in Fig. 7 so as to obtain a combined sampled position information 0 constituted by the sampled position information a0, the sampled position information b0, the sampled position information c0, and the sampled position information d0.

For other sampling time points in addition to t0, such as the sampling time point t1, although the position information of 4 sound sources may be sampled in turn to obtain the corresponding sampled position information a1, sampled position information b1, sampled position information c1, and sampled position information d1, if the sampled position information a1 corresponding to the sound source A is the same as the previous sampled position information a0, it is unnecessary to record the sampled position information a1. Thereby, assuming that the sampled position information a1 is the same as the sampled position information a0, the sampled position information d1 is the same as the sampled position information d0, the sampled position information b1 is different from the sampled position information b0, and the sampled position information c1 is different from the sampled position information c0, then the final combined sampled position information 1 corresponding to the sampling time point t1 only includes the sampled position information b1 and the sampled position information c1.

In step 612, header file, the multi-object audio data and the object audio auxiliary data are spliced in turn so as to obtain the audio data in the object audio format.

In the present embodiment, as shown in Figs. 7-8, the audio data in the object audio format includes the header file, the multi-object audio data and the object audio auxiliary data which are spliced in turn. When broadcasting the audio data, descriptor and parameter of the audio data may be read via the header file, then the combined sampled signal corresponding to each sampling time point is exacted in turn from the multi-object audio data, and the combined sampled position information corresponding to each sampling time point is exacted in turn from the object audio auxiliary data, in this way, the corresponding broadcasting operation is achieved.

In step 614, the obtained object audio is saved.

2. Low Delay Mode

In step 616, header file information containing a preset parameter is generated and sent to a preset audio process apparatus, wherein the header file information includes a time length of each frame of audio data.

In the present embodiment, similar to the File Packing Mode, the header file contains predefined parameters describing the object audio, such as ID information, and a version number. Meanwhile, different from the File Packing Mode, the header file also contains a time length of each frame of audio data. In the present embodiment, a time length of each frame of audio data is predefined and recorded, thereby during generation of the object audio, the entire object audio is divided into several parts in a unit of the time length of each frame of the audio data, then each part of the object audio segment is sent to the audio process apparatus so as to be broadcasted in real time or to be stored by the audio process apparatus, in this way, the characteristics of low delay and high real-time performance are embodied.

As an exemplary embodiment, a format and content of the header file are shown in Table 2.

Table 2

| Parameter name | Bits | Mnemonic | Content |
|---|---|---|---|
| ID | 32 | bslbf | OAFF (Object audio ID) |
| Version | 16 | uimsbf | 1.0 (Version number of object audio) |
| nObjects | 16 | uimsbf | n (Number of sound sources) |
| nSamplesPerSec | 32 | uimsbf | a (sampling frequency) |
| wBitsPerSample | 16 | uimsbf | w (byte length of each sampling) |
| nSamplesPerFrame | 16 | uimsbf | B (length of each frame) |

In step 618, the frames having been processed are counted by using the parameter i, and an initial value of the parameter i is set as i=0. If the process moves to step 618, all the audio data have been processed completed, then the process ends; and if there are audio data having not been processed yet, the value of the parameter i is added by 1, and the process moves to step 620.

In the under-mentioned steps 620-622, only data in the frame corresponding to the value of the parameter i are processed, and the process manner is the same with the above-mentioned steps 608-610, which is not elaborated herein.

In step 624, the multi-object audio data and the object audio auxiliary data in one frame respectively obtained in step 620 and step 622 are spliced so as to obtain one frame of audio data. Then, the procedure moves to step 618 to process a next frame, and moves to step 626 to process the audio.

In step 626, the generated individual frames of the object audio are respectively sent to the audio process apparatus so as to be broadcasted in real time or to be stored.

Through the above embodiment, as shown in Fig. 9, in addition to the header file on the head, the rest part of the structure of the obtained object audio is partitioned into several frames, such as a first frame (p0 frame), and a second frame (p1), and each frame includes the multi-object audio data and the object audio auxiliary data which are spliced correspondingly. Accordingly, when broadcasting the audio data, the audio process apparatus may read the descriptor and parameter of the audio data via the header file (including the time length of each frame of audio data), then exact the multi-object audio data and the object audio auxiliary data from the received each frame of object audio in turn, and then exact the combined sampled signal corresponding to each sampling time point from the multi-object audio data in turn and exact the combined sampled position information corresponding to each sampling time point from the object audio auxiliary data in turn, so as to achieve the corresponding broadcasting operation.

Corresponding to the above-mentioned embodiments of the method for achieving object audio recording, the present disclosure also provides embodiments of a device for achieving object audio recording.

Fig. 10 is block diagram illustrating a device for recording an object audio, according to an exemplary embodiment. With reference to Fig. 10, the device includes a collection unit 1001, an processing unit 1002, a combination unit 1003.

The collection unit 1001 is configured to perform a sound collection operation via a plurality of microphones simultaneously so as to obtain a mixed sound signal.

The processing unit 1002 is configured to identify the number of sound sources and position information of each sound source and separate out an object sound signal corresponding to each sound source from the mixed sound signal according to the mixed sound signal and set position information of each microphone.

The combination unit 1003 is configured to combine the position information and the object sound signal of individual sound sources to obtain audio data in an object audio format.

Fig. 11 is block diagram illustrating another device for recording an object audio, according to an exemplary embodiment. As shown in Fig. 11, on the basis of the embodiments shown in Fig. 10, the processing unit 1002 in the present embodiment includes a processing subunit 1002A.

The processing subunit 1002A is configured to identify the number of sound sources and position information of each sound source and separate out the object sound signal corresponding to each sound source from the mixed sound signal according to an amplitude difference and a phase difference formed among respective microphones by a sound signal emitted by each sound source.

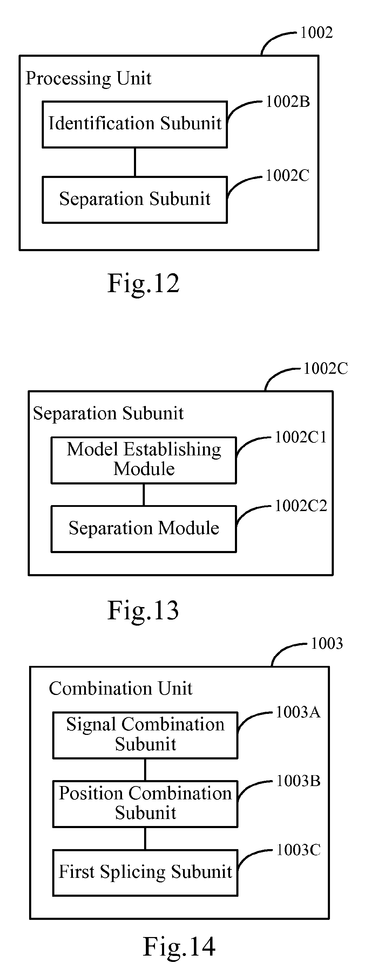

Fig. 12 is block diagram illustrating further another device for recording an object audio, according to an exemplary embodiment. As shown in Fig. 12, on the basis of the embodiments shown in Fig. 10, the processing unit 1002 in the present embodiment includes an identification subunit 1002B, and a separation subunit 1002C.

The identification subunit 1002B is configured to identify the number of sound sources and position information of each sound source from the mixed sound signal according to the mixed sound signal and the set position information of each microphone.

The separation subunit 1002C is configured to separate out the object sound signal corresponding to each sound source from the mixed sound signal according to the mixed sound signal, the set position information of each microphone, the number of the sound sources and the position information of the sound sources.

It should be noted, the structure of the identification subunit 1002B and the separation subunit 1002C in the device embodiment shown in Fig. 12 may also be included in the device embodiment of Fig. 11, which is not restricted by the present disclosure.

Fig. 13 is block diagram illustrating still another device for recording an object audio, according to an exemplary embodiment. As shown in Fig. 13, on the basis of the embodiments shown in Fig. 12, the separation subunit 1002C in the present embodiment includes a model establishing module 1002C1 and a separation module 1002C2.

The model establishing module 1002C1 is configured to establish a corresponding statistical model according to a characteristic quantity formed by a sound signal emitted by each sound source in a preset dimension.

The separation module 1002C2 is configured to identify and separate out a sound signal conforming to the position information of any sound source in the mixed sound signal via the statistical model and use this sound signal as the object sound signal corresponding to the any sound source.

Fig. 14 is block diagram illustrating still further another device for recording an object audio, according to an exemplary embodiment. As shown in Fig. 14, on the basis of the embodiments shown in Fig. 10, the combination unit 1003 in the present embodiment includes: a signal combination subunit 1003A, a position combination subunit 1003B, and a first splicing subunit 1003C.

The signal combination subunit 1003A is configured to combine corresponding object sound signals according to an arrangement order of individual sound sources so as to obtain multi-object audio data.

The position combination subunit 1003B is configured to combine the position information of individual sound sources according to the arrangement order so as to obtain object audio auxiliary data.

The first splicing subunit 1003C is configured to splice header file information containing a preset parameter, the multi-object audio data and the object audio auxiliary data in turn so as to obtain the audio data in the object audio format.

It should be noted, the structure of the signal combination subunit 1003A, the position combination subunit 1003B, and the first splicing subunit 1003C in the device embodiment shown in Fig. 14 may also be included in the device embodiments of Figs. 11-13, which is not restricted by the present disclosure.

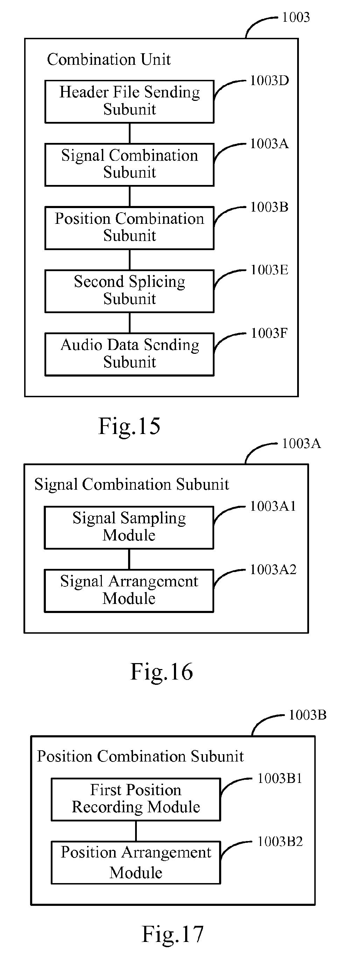

Fig. 15 is block diagram illustrating still further another device for recording an object audio, according to an exemplary embodiment. As shown in Fig. 15, on the basis of the embodiments shown in Fig. 10, the combination unit 1003 in the present embodiment includes: a header file sending subunit 1003D, a signal combination subunit 1003A, a position combination subunit 1003B, a second splicing subunit 1003E, and an audio data sending subunit 1003F.

The header file sending subunit 1003D is configured to generate header file information containing a preset parameter and send it to a preset audio process apparatus, wherein the header file information includes a time length of each frame of audio data, such that the signal combination subunit, the position combination subunit and the second splicing subunit generate each frame of audio data in object audio format conforming to the time length of each frame of audio data.

The signal combination subunit 1003A is configured to combine corresponding object audio signals according to an arrangement order of individual sound sources so as to obtain multi-object audio data.

The position combination subunit 1003B is configured to combine the position information of individual sound sources according to the arrangement order so as to obtain object audio auxiliary data.

The second splicing subunit 1003E is configured to splice the multi-object audio data and the object audio auxiliary data in turn so as to obtain each frame of audio data in the object audio format.

The audio data sending subunit 1003F is configured to send each frame of audio data in object audio format to the preset audio processing apparatus.

It should be noted, the structure of the header file sending subunit 1003D, the signal combination subunit 1003A, the position combination subunit 1003B, the second splicing subunit 1003E, and the audio data sending subunit 1003F in the device embodiment shown in Fig. 14 may also be included in the device embodiments of Figs. 11-13, which is not restricted by the present disclosure.

Fig. 16 is block diagram illustrating still further another device for recording an object audio, according to an exemplary embodiment. As shown in Fig. 16, on the basis of the embodiments shown in Fig. 14 or Fig. 15, the signal combination subunit 1003A in the present embodiment includes: a signal sampling module 1003A1 and a signal arrangement module 1003A2.

The signal sampling module 1003A1 is configured to sample the object sound signals corresponding to individual sound sources at each sampling time point respectively according to a preset sampling frequency, and arrange all the sampled signals according to the arrangement order, so as to obtain a combined sampled signal.

The signal arrangement module 1003A2 is configured to arrange the combined sampled signals obtained at each sampling time point in turn according to the sampling order, so as to obtain the multi-object audio data.

Fig. 17 is block diagram illustrating still further another device for recording an object audio, according to an exemplary embodiment. As shown in Fig. 17, on the basis of the embodiments shown in Fig. 14 or Fig. 15, the position combination subunit 1003B in the present embodiment includes: a first position recording module 1003B1 and a position arrangement module 1003B2.

The first position recording module 1003B1 is configured to sample position information corresponding to individual sound sources at each sampling time point respectively according to a preset sampling frequency, and record each sampled position information in association with corresponding sound source information and sampling time point information, so as to obtain combined sampled position information.

The position arrangement module 1003B2 is configured to arrange the combined sampled position information obtained at each sampling time point in turn according to the sampling order, so as to obtain the object auxiliary audio data.

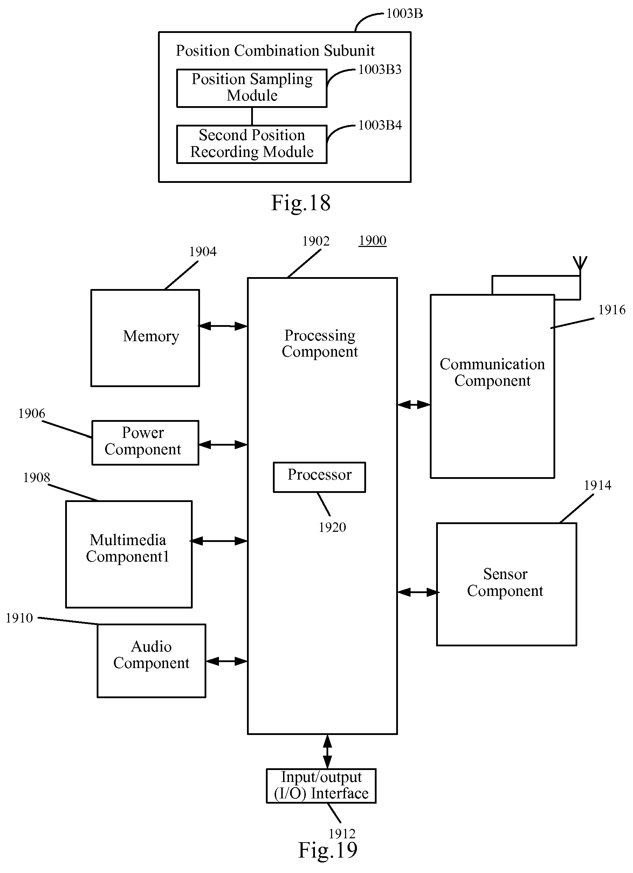

Fig. 18 is block diagram illustrating still further another device for recording an object audio, according to an exemplary embodiment. As shown in Fig. 18, on the basis of the embodiments shown in Fig. 14 or Fig. 15, the position combination subunit 1003B in the present embodiment includes: a position sampling module 1003B3, and a second position recording module 1003B4.

The position sampling module 1003B3 is configured to sample position information corresponding to individual sound sources respectively according to a preset sampling frequency.

The second position recording module 1003B4 is configured to, if a current sampling point is a first sampling time point, the obtained each sampled position information is recorded in association with corresponding sound source information and sampling time point information; and if the current sampling point is not the first sampling time point, the obtained sampled position information of each sound source is compared with previous sampled position information of the same sound source which has been recorded, and when determining that they are different via the comparison, the sampled position information is recorded in association with corresponding sound source information and sampling time point information.

With respect to the devices in the above embodiments, the specific manners for performing operations for individual modules therein have been described in detail in the embodiments regarding the methods, which will not be elaborated herein.

For device embodiments, since they are substantially corresponding to the method embodiments, the relevant contents may be referred to some explanations in the method embodiments. The above-described device embodiments are only illustrative. The units illustrated as separate components may be or may not be separated physically, the component used as a unit display may be or may not be a physical unit, i.e., may be located at one location, or may be distributed into multiple network units. A part or all of the modules may be selected to achieve the purpose of the solution in the present disclosure according to actual requirements. The person skilled in the art can understand and implement the present disclosure without paying inventive labor.

Correspondingly, the present disclosure further provides a device for achieving object audio recording, including: a processor; and a memory for storing instructions executable by the processor; wherein the processor is configured to: perform a sound collection operation via a plurality of microphones simultaneously so as to obtain a mixed sound signal; identify the number of sound sources and position information of each sound source and separate out an object sound signal corresponding to each sound source from the mixed sound signal according to the mixed sound signal and set position information of each microphone; and combine the position information and the object sound signals of individual sound sources to obtain audio data in an object audio format.

Correspondingly, the present disclosure also provides a terminal, the terminal includes: a memory; and one or more program, wherein the one or more programs is stored in the memory, and instructions for carrying out the following operations contained in the one or more programs are configured to be performed by one or more processor: perform a sound collection operation via a plurality of microphones simultaneously so as to obtain a mixed sound signal; identify the number of sound sources and position information of each sound source and separate out an object sound signal corresponding to each sound source from the mixed sound signal according to the mixed sound signal and set position information of each microphone; and combine the position information and the object sound signals of individual sound sources to obtain audio data in an object audio format.

Fig. 19 is a block diagram of a device 1900 for achieving object audio recording, according to an exemplary embodiment. For example, the device 1900 may be a mobile phone, a computer, a digital broadcast terminal, a messaging device, a gaming console, a tablet, a medical device, exercise equipment, a personal digital assistant, and the like.

Referring to Fig. 19, the device 1900 may include one or more of the following components: a processing component 1902, a memory 1904, a power component 1906, a multimedia component 1908, an audio component 1910, an input/output (I/O) interface 1912, a sensor component 1914, and a communication component 1916.

The processing component 1902 typically controls overall operations of the device 1900, such as the operations associated with display, telephone calls, data communications, camera operations, and recording operations. The processing component 1902 may include one or more processors 1920 to execute instructions to perform all or part of the steps in the above described methods. Moreover, the processing component 1902 may include one or more modules which facilitate the interaction between the processing component 1902 and other components. For instance, the processing component 1902 may include a multimedia module to facilitate the interaction between the multimedia component 1908 and the processing component 1902.

The memory 1904 is configured to store various types of data to support the operation of the device 1900. Examples of such data include instructions for any applications or methods operated on the device 1900, contact data, phonebook data, messages, pictures, video, etc. The memory 1904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1906 provides power to various components of the device 1900. The power component 1906 may include a power management system, one or more power sources, and any other components associated with the generation, management, and distribution of power in the device 1900.

The multimedia component 1908 includes a screen providing an output interface between the device 1900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1908 includes a front camera and/or a rear camera. The front camera and the rear camera may receive an external multimedia datum while the device 1900 is in an operation mode, such as a photographing mode or a video mode. Each of the front camera and the rear camera may be a fixed optical lens system or have focus and optical zoom capability.

The audio component 1910 is configured to output and/or input audio signals. For example, the audio component 1910 includes a microphone ("MIC") configured to receive an external audio signal when the device 1900 is in an operation mode, such as a call mode, a recording mode, and a voice recognition mode. The received audio signal may be further stored in the memory 1904 or transmitted via the communication component 1916. In some embodiments, the audio component 1910 further includes a speaker to output audio signals.

The I/O interface 1912 provides an interface between the processing component 1902 and peripheral interface modules, such as a keyboard, a click wheel, buttons, and the like. The buttons may include, but are not limited to, a home button, a volume button, a starting button, and a locking button.

The sensor component 1914 includes one or more sensors to provide status assessments of various aspects of the device 1900. For instance, the sensor component 1914 may detect an open/closed status of the device 1900, relative positioning of components, e.g., the display and the keypad, of the device 1900, a change in position of the device 1900 or a component of the device 1900, a presence or absence of user contact with the device 1900, an orientation or an acceleration/deceleration of the device 1900, and a change in temperature of the device 1900. The sensor component 1914 may include a proximity sensor configured to detect the presence of nearby objects without any physical contact. The sensor component 1914 may also include a light sensor, such as a CMOS or CCD image sensor, for use in imaging applications. In some embodiments, the sensor component 1914 may also include an accelerometer sensor, a gyroscope sensor, a magnetic sensor, a pressure sensor, or a temperature sensor.

The communication component 1916 is configured to facilitate communication, wired or wirelessly, between the device 1900 and other devices. The device 1900 can access a wireless network based on a communication standard, such as WiFi, 2G, or 3G, or a combination thereof. In one exemplary embodiment, the communication component 1916 receives a broadcast signal or broadcast associated information from an external broadcast management system via a broadcast channel. In one exemplary embodiment, the communication component 1916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1904, executable by the processor 1920 in the device 1900, for performing the above-described methods. For example, the non-transitory computer-readable storage medium may be a ROM, a RAM, a CD-ROM, a magnetic tape, a floppy disc, an optical data storage device, and the like.

## Claims

1. A method for achieving object audio recording, comprising:

   performing (302) a sound collection operation via a plurality of microphones simultaneously so as to obtain a mixed sound signal;
   identifying the number of sound sources and position information of each sound source and separating out an object sound signal corresponding to each sound source from the mixed sound signal, according to the mixed sound signal and set position information of each microphone (304); and
   combining (306) the position information and the object sound signals of individual sound sources to obtain audio data in an object audio format.

2. The method of claim 1, wherein the identifying the number of sound sources and position information of each sound source and separating out the object sound signal corresponding to each sound source from the mixed sound signal, according to the mixed sound signal and the set position information of each microphone (304) comprises:

   identifying the number of sound sources and position information of each sound source and separating out the object sound signal corresponding to each sound source from the mixed sound signal, according to an amplitude difference and a phase difference formed among respective microphones by sound signal emitted by each sound source.

3. The method of claim 1 or 2, wherein the identifying the number of sound sources and position information of each sound source and separating out the object sound signal corresponding to each sound source from the mixed sound signal, according to the mixed sound signal and the set position information of each microphone (304) comprises:

   identifying the number of sound sources and position information of each sound source from the mixed sound signal according to the mixed sound signal and the set position information of each microphone; and
   separating out the object sound signal corresponding to each sound source from the mixed sound signal according to the mixed sound signal, the set position information of each microphone, the number of the sound sources and the position information of the sound sources.

4. The method of claim 3, wherein the separating out the object sound signal corresponding to each sound source from the mixed sound signal according to the mixed sound signal, the set position information of each microphone, the number of the sound sources and the position information of the sound sources comprises:

   establishing a corresponding statistical model according to a characteristic quantity formed by a sound signal emitted by each sound source in a preset dimension; and
   identifying and separating out a sound signal conforming to the position information of any sound source in the mixed sound signal via the statistical model as the object sound signal corresponding to the any sound source.

5. The method of any one of the preceding claims, wherein the combining the position information and the object sound signals of individual sound sources to obtain audio data in the object audio format comprises:

> combining (608) corresponding object sound signals according to an arrangement order of individual sound sources so as to obtain multi-object audio data;
> combining (610) the position information of individual sound sources according to the arrangement order so as to obtain object audio auxiliary data; and
> splicing (612) header file information containing a preset parameter, the multi-object audio data and the object audio auxiliary data in turn so as to obtain the audio data in the object audio format.

6. The method of any one of the preceding claims, wherein the combining the position information and the object sound signals of individual sound sources to obtain audio data in the object audio format comprises:

> generating (616) header file information containing a preset parameter and sending it to a preset audio process apparatus, wherein the header file information comprises a time length of each frame of audio data; and
> generating each frame of audio data in the object audio format conforming to the time length of each frame of audio data via the following steps, and sending each frame of the audio data in the object audio format to the preset audio process apparatus:
>
> > combining (620) corresponding object audio signals according to an arrangement order of individual sound sources so as to obtain multi-object audio data;
> > combining (622) the position information of individual sound sources according to the arrangement order so as to obtain object audio auxiliary data; and
> > splicing (624) the multi-object audio data and the object audio auxiliary data in turn so as to obtain each frame of audio data in the object audio format.

7. The method of claim 5 or 6, wherein the combining corresponding object audio signals according to the arrangement order of individual sound sources so as to obtain the multi-object audio data (608, 620) comprises:

> sampling the object sound signals corresponding to individual sound sources at each sampling time point respectively according to a preset sampling frequency, and arranging all the sampled signals according to the arrangement order, so as to obtain a combined sampled signal; and
> arranging the combined sampled signals obtained at each sampling time point in turn according to the sampling order, so as to obtain the multi-object audio data.

8. The method of claim 5, 6 or 7, wherein the combining the position information of individual sound sources according to the arrangement order so as to obtain the object audio auxiliary data (610, 622) comprises:

> sampling position information corresponding to individual sound sources at each sampling time point respectively according to a preset sampling frequency, and recording each sampled position information in association with corresponding sound source information and sampling time point information, so as to obtain combined sampled position information; and
> arranging the combined sampled position information obtained at each sampling time point in turn according to the sampling order, so as to obtain the object auxiliary audio data.

9. The method of any one of claims 5 to 8, wherein the combining the position information of individual sound sources according to the arrangement order so as to obtain the object audio auxiliary data (610, 622) comprises:

> sampling position information corresponding to individual sound sources respectively according to a preset sampling frequency;
> wherein if a current sampling point is a first sampling time point, the obtained each sampled position information is recorded in association with corresponding sound source information and sampling time point information; and if the current sampling point is not the first sampling time point, the obtained sampled position information of each sound source is compared with previous sampled position information of the same sound source which has been recorded, and when determining that they are different via the comparison, the sampled position information is recorded in association with corresponding sound source information and sampling time point information.

10. A device for achieving object audio recording, comprising:

a collection unit (1001) configured to perform a sound collection operation via a plurality of microphones simultaneously so as to obtain a mixed sound signal;

a processing unit (1002) configured to identify the number of sound sources and position information of each sound source and separate out an object sound signal corresponding to each sound source from the mixed sound signal according to the mixed sound signal and set position information of each microphone; and

a combination unit (1003) configured to combine the position information and the object sound signal of individual sound sources to obtain audio data in an object audio format.

11. The device of claim 10, wherein the processing unit (1002) comprises:

a processing subunit (1002A) configured to identify the number of sound sources and position information of each sound source and separate out the object sound signal corresponding to each sound source from the mixed sound signal according to an amplitude difference and a phase difference formed among respective microphones by a sound signal emitted by each sound source.

12. The device of claim 10 or 11, wherein the processing unit (1002) comprises:

an identification subunit (1002B) configured to identify the number of sound sources and position information of each sound source from the mixed sound signal according to the mixed sound signal and the set position information of each microphone; and

a separation subunit (1002C) configured to separate out the object sound signal corresponding to each sound source from the mixed sound signal according to the mixed sound signal, the set position information of each microphone, the number of the sound sources and the position information of the sound sources.

13. The device of claim 12, wherein the separation subunit (1002C) comprises:

a model establishing module (1002C1) configured to establish a corresponding statistical model according to a characteristic quantity formed by a sound signal emitted by each sound source in a preset dimension; and

a separation module (1002C2) configured to identify and separate out a sound signal conforming to the position information of any sound source in the mixed sound signal via the statistical model as the object sound signal corresponding to the any sound source.

14. The device of any one of claims 10 to 13, wherein the combination unit (1003) comprises:

a signal combination subunit (1003A) configured to combine corresponding object sound signals according to an arrangement order of individual sound sources so as to obtain multi-object audio data;

a position combination subunit (1003B) configured to combine the position information of individual sound sources according to the arrangement order so as to obtain object audio auxiliary data; and

    a) a first splicing subunit (1003C) configured to splice header file information containing a preset parameter, the multi-object audio data and the object audio auxiliary data in turn so as to obtain the audio data in the object audio format;
    and/or
    b) a header file sending subunit (1003D) configured to generate header file information containing a preset parameter and send it to a preset audio process apparatus, wherein the header file information comprises a time length of each frame of audio data, such that the signal combination subunit (1003A), the position combination subunit (1003B) and a second splicing subunit (1003E) generate each frame of audio data in object audio format conforming to the time length of each frame of audio data;

the second splicing subunit (1003E) configured to splice the multi-object audio data and the object audio auxiliary data in turn so as to obtain each frame of audio data in the object audio format; and

an audio data sending subunit (1003F) configured to send each frame of audio data in object audio format to the preset audio processing apparatus.

15. The device of claim 14, wherein the signal combination subunit (1003A) comprises:

a signal sampling module (1003A1) configured to sample the object sound signals corresponding to individual sound sources at each sampling time point respectively according to a preset sampling frequency, and arrange all the sampled signals according to the arrangement order, so as to obtain a combined sampled signal; and a signal arrangement module (1003A2) configured to arrange the combined sampled signals obtained at each sampling time point in turn according to the sampling order, so as to obtain the multi-object audio data.

16. The device of claim 14 or 15, wherein the position combination subunit (1003B) comprises:

a first position recording module (1003B1) configured to sample position information corresponding to individual sound sources at each sampling time point respectively according to a preset sampling frequency, and record each sampled position information in association with corresponding sound source information and sampling time point information, so as to obtain combined sampled position information; and a position arrangement module (1003B2) configured to arrange the combined sampled position information obtained at each sampling time point in turn according to the sampling order, so as to obtain the object auxiliary audio data;

and/or
wherein the position combination subunit (1003B) comprises:

a position sampling module (1003B3) configured to sample position information corresponding to individual sound sources respectively according to a preset sampling frequency; a second position recording module (1003B4) configured to, if a current sampling point is a first sampling time point, the obtained each sampled position information is recorded in association with corresponding sound source information and sampling time point information; and if the current sampling point is not the first sampling time point, the obtained sampled position information of each sound source is compared with previous sampled position information of the same sound source which has been recorded, and when determining that they are different via the comparison, the sampled position information is recorded in association with corresponding sound source information and sampling time point information.

17. A computer program, which when executed on a processor of an electronic apparatus, performs a method according to any one of claims 1 to 9.

Individual Sound
Channel Audio

Positions of
Individual Sound
Channel Audio

| Sound Channel I Audio | ← - - - - - - - → | Position I |
| Sound Channel II Audio | ← - - - - - - - → | Position II |
| Sound Channel III Audio | ← - - - - - - - → | Position III |

⋮               ...               ⋮

↓                               ↓

Object Audio Manufacturing Apparatus

↓

Object
Audio

Fig.1

| Sound Source I | - - → MIC1 - - → | Object Sound Signal I |
| ound Source II | - - → MIC2 - - → | Object Sound Signal II |
| Sound Source III | - - → MIC3 - - → | Object Sound Signal III |

⋮          ⋮                    ⋮

Positions of
Individual
Sound Source

↓                               ↓

Object Audio Manufacturing Apparatus

↓

Object
Audio

Fig.2

| Sound collection operation is performed via a plurality of microphones simultaneously to obtain a mixed sound signal | 302 |

| Identify the number of sound sources and position information of each sound source and separate out an object sound signal corresponding to each sound source from the mixed sound signal, according to the mixed sound signal and set position information of each microphone | 304 |

| Combine the position information of each sound source and the object sound signal to obtain audio data in an object audio format | 306 |

Fig.3

Collect mixed sound signal — 402

Acquire position condition of MIC — 404

Identify sound sources, and acquire the number of the sound sources and position information — 406

Separate out the sound source to obtain an object sound signal — 408

Combine the object sound signal and the position information — 410

Fig.4

Sound Source I

Sound Source II

Sound Source III

MIC1

MIC2

Fig.5

Fig.6

Fig.7

Combined
Sampled Position
Information 0

Combined Sampled
Position
Information 1

| a0 | b0 | c0 | d0 | b1 | c1 | ... |

t0 | t1 | ...

| Header File | Multi-object Audio Data | Object Audio Auxiliary Data |

t0 | t1 | ...

| A0 | B0 | C0 | D0 | A1 | B1 | C1 | D1 | ... |

Combined
Sampled Signal 0

Combined
Sampled Signal 1

Fig.8

p0

p1

| Header File | Multi-object Audio Data | Object Audio Auxiliary Data | Multi-object Audio Data | Object Audio Auxiliary Data | ... |

p0

p1

Fig.9

Device for Recording Object Audio

| Collection Unit | 1001 |

| Processing Unit | 1002 |

| Combination Unit | 1003 |

Fig.10

1002

Processing Unit

| Processing Subunit | 1002A |

Fig.11

1002

Processing Unit

Identification Subunit — 1002B

Separation Subunit — 1002C

Fig.12

1002C

Separation Subunit

Model Establishing Module — 1002C1

Separation Module — 1002C2

Fig.13

1003

Combination Unit

Signal Combination Subunit — 1003A

Position Combination Subunit — 1003B

First Splicing Subunit — 1003C

Fig.14

— 1003

**Combination Unit**

| Header File Sending Subunit | — 1003D |

| Signal Combination Subunit | — 1003A |

| Position Combination Subunit | — 1003B |

| Second Splicing Subunit | — 1003E |

| Audio Data Sending Subunit | — 1003F |

Fig.15

— 1003A

**Signal Combination Subunit**

| Signal Sampling Module | — 1003A1 |

| Signal Arrangement Module | — 1003A2 |

Fig.16

— 1003B

**Position Combination Subunit**

| First Position Recording Module | — 1003B1 |

| Position Arrangement Module | — 1003B2 |

Fig.17

Fig.18

Fig.19